# EUROPEAN PATENT SPECIFICATION

(11) **EP 1 510 528 B1**
(45) Date of publication and mention of the grant of the patent: **10.01.2007**
(21) Application number: 04104103.9
(22) Date of filing: 26.08.2004
(51) Int. Cl.: C08B 37/10

(54) **Process for preparing high purity low molecular weight heparins**
Verfahren zur Herstellung von hochreinen, niedrigmolekularen Heparinen
Procédé de préparation d'héparines présentant une grande pureté et une faible masse moléculaire

(30) Priority: 29.08.2003 IT MI20031679
(43) Date of publication of application: 02.03.2005
(73) Proprietor: OPOCRIN S.p.A., 41040 Corlo di Formigine (Modena) (IT)
(72) Inventor: Bianchini, Pietro, 41100 Modena (IT); Liverani, Lino, 48018 Faenza (IT); Mascellani, Giuseppe, 40050 Monte San Pietro (IT); Tiddia, Stefania, 41100 Modena (IT)
(74) Representative: Gervasi, Gemma

(56) References cited:
- EP-A- 0 040 144
- EP-A- 0 293 539
- DE-B- 1 228 241
- US-A- 4 990 502
- US-A- 5 389 618

## Description

### Field of the invention

The present invention relates to an improved process for producing high purity low molecular weight heparins.

### Prior art

Low molecular weight (LMW) heparins with the name (International Non-proprietary Name, INN) of enoxaparin, dalteparin, nadroparin, parnaparin, tinzaparin are known, and their manufacturing processes are known.

EP 40144 describes low molecular weight heparins with average molecular weight between 2000 and 10000 daltons, and a process for preparing low molecular weight heparins by way of a water soluble heparin ester, for example benzylated sodium salt, prepared from a bezethonium heparinate intermediate, said ester being subjected to depolymerisation with bases, for example sodium hydroxide, to give the desired heparinic fractions by hydrolysis.

WO 80/01383 corresponding to US 4,303,651 describes fragments of heparin consisting of 14-18 saccharide units and characterised by a very precise sequence. The pharmacopoeia specifications relating to dalteparin (the INN of the product obtained with US 4,303,651) define the following molecular weight distribution profiles: average molecular weight between 5600 and 6400 daltons, fractions of molecular weight lower than 300 < 13.0%, fractions of molecular weight greater than 8000 between 15.0% and 25.0%.

IT 1,248,557 and the corresponding US 5,389,618 claim an enoxaparin characterised by an average molecular weight of between 3500 and 5500 daltons and with fractions of molecular weight less than 2000 between 9% and 20% and fractions of molecular weight greater than 8000 between 5% and 20%. The preparation process thereof is essentially that known from EP 40144 and comprises a depolymerisation, by hydrolysis, of the heparin benzyl ester. Compared with this known process, IT 1,248,557 indicates that a degree of esterification of the heparin ester of between 9.5% and 14% is the essential condition to achieve the expected depolymerisation conformity.

In EP 40144 and IT 1,248,557 the intermediate heparin benzethonium salt, soluble only in organic solvent, is used to obtain the heparin benzyl ester. Said intermediate is prepared by precipitation with water and, being of a gelatinous pitch-like consistency, is not easily washable. Therefore substantial benzethonium contamination is always present in the process through to the end product itself with consequent loss of purity, effects on the colour of the product and on its stability, and presumably on its toxicity.

### Summary of the invention

The object of the present invention is essentially to improve the preparative method of EP 40144 in order to obtain final products of higher purity and without colour.

To achieve this objective, as well as other advantages which will be described hereinafter, the present invention presents a process for preparing high purity low molecular weight heparins with average molecular weight of between 2000 and 10000 daltons by the stages of forming an intermediate heparin benzethonium salt, from this latter a water soluble heparin ester, and of subjecting said ester to depolymerisation with bases to form said low molecular weight heparins, characterised in that at least said stage of heparin benzethonium salt formation is carried out on an inert adsorbent solid matrix of filtering material, or filter-aid, low molecular weight heparins being finally subjected to a purification stage by reducing the impurities present with borohydride.

In a preferred embodiment of the invention, each stage of the process is conducted on said matrix consisting of filter-aid, which is only removed, preferably by centrifugation, during the stage of forming said low molecular weight heparins, and before said reduction with borohydride.

### Detailed description of the invention

According to the present invention, it has surprisingly been found that the benzethonium salt adsorbed onto said matrix consisting of filter-aid, acting as a solid substrate, can be washed with NaCl solutions, preferably of ≤ 1.0 M molarity, to obtain the selective removal of impurities such as nucleic acids and polysaccharides such as dermatan sulfate, chondroitin sulfates and heparan sulfate present in the heparin; and with water to completely remove the reagent benzethonium chloride. Preferably, the final washing waters must have a UV absorbance at 270 nm of less than 0.5 units.

In addition it has been found that said filter aid-benzethonium salt mixture effectively allows all subsequent chemical reactions proposed in the process of EP 40144 to take place, including esterification and hydrolysis; and that in addition said solid substrate enables the capture of chromophores having formed in the secondary cleavage reaction, which also takes place in said depolymerisation, of undoubted advantage for the purity of the heparin obtained.

Said filter material, or filter-aid, is chosen from all suitable coadjuvants used in polymer filtration, in particular diatomaceous earth, perlite (for example Europerl 500) and Diacel CF/S.

According to another aspect of the present invention, it has also been found that by subjecting the final low molecular weight heparin to reduction with borohydride, for example NaBH₄ in water at pH 8.2 to 8.6, for example in a quantity of 16-30 mg/g crude enoxaparin, the desired fraction is obtained, for example enoxaparin with a higher degree of purity and having the characteristic of remaining stable over time in aqueous solution, without becoming coloured, and lacking benzyl type contaminants whose signals are frequently detectable in currently known products by ¹³C-NMR spectra at about 132 ppm or ¹H-NMR spectra with chemical shifts at about 7.5 ppm.

According to the present invention it has been found that, in the absence of the final purification stage by reduction, enoxaparin is often coloured and its aqueous solutions fall outside specification.

The process of the present invention proves to be particularly suitable for the production of average molecular weight enoxaparin of between 3500 and 5500 daltons and with 12% to 20% of fractions having a molecular weight less than 2000 daltons and between 68% and 88% of fractions having a molecular weight within the range 2000 to 8000 daltons.

For the purposes of further understanding the characteristics and advantages of the invention, non-limiting examples of practical implementation are described hereinafter.

Measurements of molecular weight distribution profiles were carried out by SE.HPLC, with the standards and conditions described in the European Pharmacopoeia (monograph 01/2002:0828). Activity measurements, purity evaluations, identification assays and all the other tests were carried out in accordance with the 2002 European Pharmacopoeia.

### Example 1

Production of enoxaparin by means of: isolating heparin benzethonium salt on filter-aid, forming heparin benzyl ester sodium salt on filter-aid, hydrolysis of the benzyl ester supported on filter-aid and isolation of enoxaparin.

### Example 1a

### Heparin benzethonium salt

44 Kg of water and 8.8 kg of benzethonium chloride are fed into a suitable reactor A and heated to 50°-56°C and stirred until dissolved.

33 kg of water and 3.3 kg of heparin are fed into another reactor B, heated to 30°-36°C and stirred for at least 60 minutes until dissolved.

The solution in reactor B is adjusted to pH - 8.5 with sodium hydroxide solution. To solution A are added 3.3 kg of the filter-aid Europerl 500^{®} . Solution B is then added dropwise over a period of 1-2 hours into reactor A at 55°-65°C while stirring.

At the end of the addition stirring and heating are maintained for 0.5 hours.

The mass is centrifuged and the cake obtained is washed with 130 litres of water previously heated to 50-56°C.

The cake is then transferred into a reactor in which it is crushed by shaking vigorously with 200 litres of a 1 M solution of Nacl for 6 hours at a temperature of 50-56°C.

The precipitate is collected in a centrifuge, the filtrate is discarded and the washing procedure is repeated three times with 180 litres of hot water each time. Washing is repeated until the final washing solution (diluted 1 to 10) has an absorbance at 270 nm of < 0.5.

The cake is removed from the centrifuge and dried under vacuum at 60°C for 26 hours until moisture content = 1.51 % according to K.F.

12.44 kg of heparin benzethonium salt supported on filter aid, are obtained.

### Example 1b

### Purification of crude heparin by recovery from benzethonium salt

100 g of crude heparin containing about 3.5% of dermatan sulfate, (determined by steric exclusion liquid chromatography on two columns in series TSK 2000 SW (60 x 0.75) and TSK 3000 SW (60 x 0.75) and UV detector at 205 nm) and contaminated with nucleic acids (of which, in accordance with the European Pharmacopoeia test, a solution of 40 mg in 10 ml water has an absorbance at 260 and 280 nm greater than 0.750 and 0.540 respectively) are subjected to salification with 267 g benzethonium chloride on 100 g of filter aid (Diacel CF/S^{®}) under the conditions described in example 1a. At the end of the reaction the precipitate is collected by buckner funnel and pressed under vacuum. The cake is resuspended in 2.5 litres of a 0.5 M Nacl solution and stirred for 1 hour at 50°C, filtered again and pressed in a buckner funnel. The cake is again resuspended in 2.5 litres of a 1 M Nacl solution and stirred for 1 hour at 50°C, then refiltered and resuspended in 2.5 litres of water by stirring at 50°C.

Washing with water is repeated. The cake is finally suspended in 1.5 litres of 2 M Nacl solution and maintained under agitation for 1 hour at about 45°C. The Diacel CF/S^{®} filter-aid is filtered off, the cake is washed on the filter with 0.5 litre of 1 M NaOAc solution. Filtrate and washings are pooled. The solution is brought to pH 6.2 and 1.8 volumes of methanol are added. Pure heparin is precipitated which is collected by filtration and dried.

94 g of heparin are obtained, containing 0.02% of dermatan sulfate with UV absorbance at 260 and 280 nm of 0.095 and 0.045 respectively.

Nucleic acids and dermatan sulfate were decomplexed and selectively removed from the benzethonium salt with 0.5 M and 1.0 M solutions respectively.

### Example 1c

### Heparin benzyl ester sodium salt supported on filter-aid

132 g of heparin benzethonium salt/filter-aid, prepared in example 1a, and 935 g N,N-dimethylformamide are fed into a suitable reactor and stirred for 2 hours at 40-46°C. The water bath temperature is lowered to 20°C and over a period of 30 minutes, 110 g of benzyl chloride are added; the mass is then stirred for 7 hours at 33°±3°C. After the reaction mixture has cooled to 20°±6°C, 1600 g of a solution of methanol containing 210 g of anhydrous sodium acetate are added over a period of 2 hours. The mass is stirred for a further 12 hours at 20°±6°C. The reaction mass is filtered by buckner funnel under vacuum and repeatedly washed over the filter and in the reactor by lengthy agitation of 8 hours with a total of 3200 g methanol containing 320 g of anhydrous sodium acetate in solution.

Following the methanol/sodium acetate washes, the precipitate is suspended in 2000 g of acetone and stirred for a further 6 hours at about 20°C. The precipitate is collected on the filter, pressed under vacuum and dried under vacuum in a drier at 50°C for 24 hours. 74 g of heparin sodium benzyl ester supported on filter-aid (LE2711) are obtained. On analysis the filter-aid content of this ester = 37.3%

Sodium acetate content = 16.1 %

Purity of the ester evaluated by HPLC = 44.5%

Degree of esterification:
- measured by recovering benzyl alcohol from the hydrolysis = 8.83%;
- measured in terms of the molar fraction esterified, by integrating ¹H-NMR signals = 57%

Dermatan sulfate content < 0.02%

### Example 1d

### Alkaline hydrolysis of the ester and consequent depolymerisation by cleavage via β -elimination on esterified uronic acid and isolation of enoxaparin

The heparin benzyl ester/filter-aid mixture, as obtained in example 1c, contains ~ 40% of filter-aid, approximately 16% of sodium acetate as contaminant and about 44% of heparin sodium ester. These percentage are estimated as indicated in the next example, 1.2

### Description of the hydrolysis

2.40 kg of the benzyl ester/filter-aid mixture is suspended in 8 litres of purified water and heated under agitation at 60°C to favour removal of the ester from the solid support and to favour its solubilisation.

800 ml of 1 N sodium hydroxide and water are added to the solution in order to bring the ester concentration to about 10% and the normality of the sodium hydroxide to approximately ≤ 0.1 N. The mixture is heated to 60°C.

The reaction proceeds for 45 minutes during which time the pH is checked to ensure it remains ≥ 11.0. If necessary sodium hydroxide is added, the solution is cooled and neutralised with 0.1 N hydrochloride acid. The solution is filtered. Sodium acetate is added to the filtrate in an quantity sufficient to achieve 12% (w/v) and the pH is adjusted to 6.0 ± 0.2, after which it is precipitated with three volumes of methanol. The precipitate is collected and dried. 0.73 kg of crude depolymerised heparin are obtained in the form of the sodium salt.

### Example 1.2

### Study of the hydrolysis process in connection with the degree of esterification

From three different injectable heparins, batch numbers 15652, 16517, 16546, obtained by means of the salification with benzethonium process of example 1a and of the esterification of example 1c, industrial batches were obtained from which samples HL 2709, HL 2710, HL 2711 respectively were withdrawn, either for analytical characterisation or for examining the hydrolysis process in connection with their degree of esterification.

The purity of said samples was estimated after extracting all water soluble material from the filter-aid and measuring the resultant solution on HP.SEC, by comparing the area under the curve of the sample under examination with an in-house reference consisting of heparin.

The quantity of filter-aid was determined after extraction of solubles, washing the filter aid, drying and weighing;

The content of NaOAc contaminant was determined by HP.SEC, or by ionic HPLC on anionic exchange columns and conductability detector (DXCOO Dionex).

Degree of esterification was determined by measuring with HPLC the benzyl alcohol originated from saponification of the ester at 0°C (Pharmacopoeia). Alternatively, the esterified molar fraction IdoA-COO-CH₂-C₆H₅/(IdoA-COOH + IdoACOO-CH₂-C₆H₅) was evaluated by means of a calculation based on integrating the signals of the 5 aromatic protons at about 7.5 ppm, and of the 2 benzyl protons of the reducing anomers of uronic acids and glucosamine and the H₅ of IdoA2SO₃ lying between 4.5 and 5.7 ppm, in the ¹H-NMR spectrum of the ester solution extracted from the filter-aid.

For the NMR spectroscopic measurements it was convenient to extract the solubles from the filter-aid and lyophilise the solution. NMR tests were carried out on the lyophilised product.

The LE2709, LE2710 and LE2711 samples were characterised, analysed, and tested to verify the degree of esterification either by measuring benzyl alcohol with HPLC or ¹H-NMR. The samples were hydrolysed by the process in example 1d and gave rise to the low molecular weight heparin of batch numbers HL2878, HL2879, HL 2880. The values of degrees of esterification in the 2 measurement units are given in table 1.2 III.

**Table 1.2 III**

| ESTER | | | CORRESPONDING ENOXAPARIN | | | | | | | AXa |
|---|---|---|---|---|---|---|---|---|---|---|
| → | | | MWw | | | | | | | |
| Batch no. | degree of esterification | | Batch no. | | Amount in | Amount in | Amount in | MWw | Mw/Mn | IU/mg |
| | % weight | % mol. fraction | | | % | % | % | | | |
| | | | | | < 2000 | > 8000 | 2000- 8000 | | | |
| LE 2709 | 11.04 | 72% → | HL 2878 | | 18.6 | 9.2 | 72.3 | 4270 | 1.42 | 97.0 |
| LE 2710 | 8.69 | 58% → | HL 2879 | 15.1 | | 13.2 | 71.7 | 4780 | 1.46 | 86.7 |
| LE 2711 | 8.83 | 57% → | HL 2880 | 15.1 | | 13.4 | 71.5 | 4800 | 1.46 | 87.6 |

Referring to this table, a degree of esterification equal to 11.04% by weight corresponds to the esterification of 72% of all available carboxyls within heparin molecules (there being about ¹³⁰⁰⁰/₆₀₀ ~ 22). This means that only 28% of the carboxyls (equal to - 6 carboxyls within heparin) remain free i.e. not esterified.

It should be noted in this respect that, in addition to the essential steps of the preparative process, a partial degree of esterification, such as that corresponding to a molar fraction of 72%, is essentially also taught in EP 40144 (page 21, lines 31-33 of EP 40144).

The aforesaid table also highlights that, in actual fact, with degrees of esterification of 8.69% and 8.83%, i.e. lower than the range indicated as critical in IT 1,248,557 (9.5%-14%), enoxaparins are obtained with molecular weight values and oligomer fractions of < 2000 Da and > 8000 Da as specified in that patent.

### Example 1.3

### Critical parameters of hydrolysis for the same degree of esterification

Hydrolysis was conducted under different conditions of NaOH concentration and temperature on a single batch of heparin benzyl ester sodium salt, for the same degree of esterification.

The relative tests were conducted on the batch of starting ester heretofore identified as LE2710, i.e. with 8.69% degree of esterification by weight, and are listed in the following table:

**HYDROLYSIS AND DEPOLYMERISATION TESTS**

| | | | |
|---|---|---|---|
| Starting ester: | LE2710 | benzyl concentration: | about 38000 ppm equal to 3.8% |
| preparation | operating conditions | benzyl concentration | MW |
| LE2710 A | hydrolysis in 1 N NaOH 0°C for 60 mins. | 37873 ppm | 9938 |
| | | | |
| LE2710 B | hydrolysis in 1 N NaOH 80°C for 60 mins. | 35728 ppm | 8374 |
| | | | |
| LE2710 C | hydrolysis in 1 N NaOH 60°C for 60 mins. | 37716 ppm | 8970 |
| | | | |
| LE2710 a | hydrolysis in 0.1 N NaOH 60°C for 45 mins. | 36246 ppm | 4141 |
| | | | |
| LE2710 b | hydrolysis in 0.01 N NaOH 60°C for 45 mins. | 9202 ppm | 10481 |
| | | | |
| LE2710 c | hydrolysis in 0.3 N NaOH 60°C for 45 mins. | 34746 ppm | 4830 |
| | | | |
| LE2710 d | hydrolysis in 0.033 N NaOH 60°C for 45 mins. | 29068 ppm | 5921 |
| | | | |
| LE2710 /0° | hydrolysis in 0.1 N NaOH 0°C for 45 mins. | 20405 ppm | 11813 |
| | | | |
| LE2710/85° | hydrolysis in 0.1 N NaOH 85°C for 45 mins. | 36876 ppm | 3628 |

Note: in the column "benzyl concentration" values in ppm are given, expressed on the crude ester containing filter-aid and sodium acetate. The 8.69% value was obtained in relation to ester purity (44%).

The hydrolysis stage comprises at least two reactions:
- ester hydrolysis reaction, prevailing
- β-elimination reaction, concurrent

The reaction which leads to depolymerisation is essentially β-elimination. To achieve a MWw ~ 4500 it is sufficient that out of about 15-16 esterified carboxyls only about 3 carboxyls are cleaved.

Possibly, therefore, the parameter which controls this stage of the process is not only the degree of esterification of the benzyl ester intermediate, given that, on the same batch LE 2710 with a 8.69% degree of esterification, it is observed that a molecular weight of 4141 is obtained only with 0.1 N NaOH (and not 1 N) and only at a temperature of 60°C (see LE2710 a in particular).

With the same ester at 0°C and at 85°C a MWw of 11,813 (see LE2710/0°) and a MWw of 3628 (see LE 2710/85°), respectively, are obtained.

MWw = 11,813 signifies essentially that there is no depolymerisation, while the molecular weight MWw = 3628 approaches excessive depolymerisation.

Therefore these tests demonstrate that, in said stage, what is critical for depolymerisation is not so much the degree of esterification, which is 58% if expressed in mole fractions (e.g. LE 2710), as the modest amount of esters which undergo simultaneous hydrolysis and cleavage. This amount is equivalent to about 12%, in example LE 2710, if expressed in mole fractions. An amount of 12% in mole fractions corresponds to about 1.8-2.0% if expressed in terms of weight (benzyl alcohol/ester), as reported in IT 1,248,557.

### Example 2

### Purification of enoxaparin by reduction with borohydrides

Crude depolymerised enoxaparin, as obtained in example 1d, is purified as follows.

The product is dissolved in water to 10% and brought to pH 8.4 ± 0.2 with 1N NaOH.

Add sodium borohydride in a quantity of 17 g/kg heparin, as solid aliquots over a period of 40 minutes, leave to rest for 1 hour, then bring pH to 4.0 to 4.4 with HCl (diluted 1:3) to eliminate excess borohydride. Leave to rest for 30 minutes, then add the 12% sodium acetate, filter and precipitate the enoxaparin with 3 V/V of MeOH.

Leave to decant for at least one night, then siphon off the supernatant, recover the precipitate by filtration and wash with a solution of sodium acetate in MeOH.

To remove any boron possibly left as contaminant in the form of borates proceed as follows.

Redissolve the precipitate in water (14%), bring the pH to 7 ± 0.2, then seed in a column filled with Amberlite IRA 743.

Elute at 5 cm/min (for a filled column: ∅ 20 x 85 cm the suggested flow is 1.6 litres/min), maintaining the pH of the eluate at 6.5 ± 1.0 with acetic acid diluted 1:2. Wash the column until the refractive index = 0 (about 0.6 V of the column) then add NaOAc (12% on the volume), adjust pH to 6.0 ± 0.2, filter sterilely on sterile membranes, then precipitate with 3 V/V of MeOH.

Leave to decant for at least one night then siphon off the supernatant, filter off the precipitate and wash with a solution of sodium acetate in MeOH.

The elimination of acetate and residual solvents, by washing with ethanol, drying and packaging, follow standard procedures.

By means of the aforedescribed purification a batch of enoxaparin 40100/B is obtained whose 10% solution is less coloured than the reference solution BY7 in accordance with the European Pharmacopoeia test.

Based on the experimental observations derived from the aforementioned examples, it can be added that in general, in addition to the aforedescribed principle advantages, in accordance with the process of the present invention, it has also been found that an adequate depolymerisation conformity, i.e. the ideal balance between high and low molecular weights to achieve the best activity, is not dependent so much on the degree of esterification rather, for the same degree of esterification, on the temperature and concentration of the base used in the hydrolysis. It should also be noted that depolymerisation occurs in solution, while the percentages of fractions of MW < 2000 = 12% to 20% and fractions of MW > 8000 = 5% to 20% are specifications of the pure product, finished and isolated in the solid state. It has also been found that said specifications can be set for the product in the isolating stage by means of:
- sufficient saline concentrations of NaCl or NaOAc and a sufficient ratio of water and acetone miscible alcohol antisolvents; such as for example
- adjusting the direct correlation between increased concentration of electrolytes in solution and antisolvent volumes and a greater percentage of precipitable lower molecular weight fractions.

## Claims

1. Process for preparing high purity low molecular weight heparins with average molecular weight of between 2000 and 10000 daltons by the stages of forming an intermediate heparin benzethonium salt, from this latter a water soluble heparin ester, and of subjecting said ester to depolymerisation with bases to form said low molecular weight heparins, **characterised in that** the stages of forming an intermediate heparin benzethonium salt, from this latter a water soluble heparin ester, and of subjecting said ester to depolymerisation with bases to form said low molecular weight heparins are carried out on an inert adsorbent solid matrix of filtering material, or filter-aid, said low molecular weight heparins being finally subjected to a purification stage by reducing the impurities present with borohydride.

2. Process as claimed in claim 1, **characterised in that** said filtering material, or filter-aid is chosen from coadjuvants used in polymer filtration, diatomaceous earth, perlite, Europerl 500, Diacel CF/S.

3. Process as claimed in claim 1, **characterised in that** the stage of forming a water soluble ester of heparin is conducted with a degree of esterification of said ester of less that 9.5%.

4. Process as claimed in claim 1, **characterised in that** the stage of reducing with borohydride is conducted with NaBH₄ in water at pH 8.2 to 8.6.

5. Process as claimed in claim 1, **characterised in that** said low molecular weight heparin is enoxaparin with a dermatan sulfate impurity of less than 0.04%, said stages comprising isolating heparin benzethonium salt on filter-aid, forming heparin benzyl ester sodium salt on filter-aid, hydrolysis of the benzyl ester supported on filter-aid, isolating enoxaparin with removal of said filter-aid and purifying the enoxaparin thus obtained by reacting with borohydride.

6. Process as claimed in claim 3, **characterised in that** said low molecular weight heparin is enoxaparin with a dermatan sulfate impurity of less than 0.04%, said stages comprising isolating heparin benzethonium salt on filter-aid, forming heparin benzyl ester sodium salt on filter-aid with a degree of esterification of said ester of less than 9.5%, hydrolysis of the benzyl ester supported on filter-aid, isolating enoxaparin with removal of said filter-aid and purifying the enoxaparin thus obtained by reacting with borohydride.

7. Process as claimed in claims 5 and 6, **characterised in that** said low molecular weight heparin is enoxaparin with an average molecular weight of between 3500 and 5500 daltons.

8. Process as claimed in claim 7 **characterised in that** said low molecular weight heparin is enoxaparin with fractions of weight less than 2000 daltons between 12% and 20% and fractions of molecular weight within the range 2000 to 8000 daltons between 68% and 88%.

## Patentansprüche

1. Verfahren zum Herstellen von hochreinen, niedrig molekulargewichtigen Heparinen mit einem Durchschnittsmolekulargewicht zwischen 2.000 und 10.000 Daltons durch die Schritte des Bildens eines Heparinbenzethoniumsalzes als Zwischenprodukt, ausgehend von diesem danach eines wasserlöslichen Heparinesters sowie des Unterwerfens des Esters einer Depolymerisation mit Basen, um die niedrig molekulargewichtigen Heparine zu bilden, **dadurch gekennzeichnet, dass** die Schritte des Bildens eines Heparinbenzethoniumsalzes als Zwischenprodukt, aus diesem dann eines wasserlöslichen Heparinesters sowie des Unterwerfens des Esters einer Depolymerisation mit Basen, um die niedrig molekulargewichtigen Heparine zu bilden, auf einer Feststoffmatrix aus inertem Adsorptionsmittel aus Filtermaterial oder aus Filterhilfe durchgeführt werden, wobei die niedrig molekulargewichtigen Heparine am Ende durch Verringern der anwesenden Verunreinigungen mit Borhydrid einem Aufreinigungsschritt unterworfen werden.

2. Verfahren nach Anspruch 1, **dadurch gekennzeichnet, dass** das Filtermaterial oder die Filterhilfe ausgewählt ist aus bei der **Polymerfiltration eingesetzten Cohilfsmitteln, Kieselgur, Perlit,** Europerl 500 und Diacel CF/S.

3. Verfahren nach Anspruch 1, **dadurch gekennzeichnet, dass** der Schritt des Bildens eines wasserlöslichen Esters von Heparin mit einem Veresterungsgrad des Esters von weniger als 9,5 % durchgeführt wird.

4. Verfahren nach Anspruch 1, **dadurch gekennzeichnet, dass** der Schritt des Verringerns mit Borhydrid mit NaBH₄ in Wasser bei einem pH-Wert zwischen 8,2 und 8,6 durchgeführt wird.

5. Verfahren nach Anspruch 1, **dadurch gekennzeichnet, dass** das niedrig molekulargewichtige Heparin Enoxaparin mit einer **Dermatansulfatverunreinigung von weniger als 0,04 % ist, wobei die** Schritte das Isolieren von Heparinbenzethoniumsalz auf der Filterhilfe, das Bilden von Heparinbenzylesternatriumsalz auf der Filterhilfe, die Hydrolyse des auf der Filterhilfe getragenen Benzylesters, das Isolieren von Enoxaparin durch die Entfernung der Filterhilfe und das Aufreinigen des so erhaltenen Enoxaparins durch Reagieren mit Borhydrid umfassen.

6. Verfahren nach Anspruch 3, **dadurch gekennzeichnet, dass** das niedrig molekulargewichtige Heparin Enoxaparin mit einer Dermatansulfatverunreinigung von weniger als 0,04 % ist, wobei die Schritte das Isolieren von Heparinbenzethoniumsalz auf der Filterhilfe, das Bilden von Heparinbenzylesternatriumsalz auf der Filterhilfe mit einem Veresterungsgrad des Esters von weniger als 9,5 %, die Hydrolyse des auf der Filterhilfe getragenen Benzylesters, das Isolieren von Enoxaparin durch die Entfernung der Filterhilfe und das Aufreinigen des so erhaltenen Enoxaparins durch Reagieren mit Borhydrid umfassen.

7. Verfahren nach Anspruch 5 oder 6, **dadurch gekennzeichnet, dass** das niedrig molekulargewichtige Heparin Enoxaparin mit einem Durchschnittsmolekulargewicht zwischen 3.500 und 5.500 Daltons ist.

8. Verfahren nach Anspruch 7, **dadurch gekennzeichnet, dass** das niedrig molekulargewichtige Heparin Enoxaparin mit 12 % bis 20 % Fraktionen eines Molekulargewichts von weniger als 2.000 Daltons und mit 68 % bis 88 % Fraktionen eines Molekulargewichts innerhalb eines Bereiches zwischen 2.000 und 8.000 Daltons ist.

## Revendications

1. Procédé de préparation d'héparines présentant une grande pureté et une faible masse moléculaire, d'une masse moléculaire moyenne comprise entre 2 000 et 10 000 daltons, comprenant les étapes consistant à former un sel de benzéthonium héparine intermédiaire, puis à partir de celui-ci un ester hydrosoluble d'héparine, et à soumettre ledit ester à une dépolymérisation avec des bases pour former lesdites héparines présentant une faible masse moléculaire, **caractérisé en ce que** les étapes consistant à former un sel de benzéthonium héparine intermédiaire, puis à partir de celui-ci un ester hydrosoluble d'héparine, et à soumettre ledit ester à une dépolymérisation avec des bases pour former lesdites héparines présentant une faible masse moléculaire sont exécutées sur une matrice solide inerte absorbant de substance filtrante, ou adjuvant de filtration, lesdites héparines présentant une faible masse moléculaire étant finalement soumises à une étape de purification en réduisant les impuretés présentes avec un borohydrure.

2. Procédé selon la revendication 1, **caractérisé en ce que** ladite substance de filtration, ou adjuvant de filtration, est choisie parmi les coadjuvants utilisés dans la filtration des polymères, terre de diatomées, perlite, Europerl 500, Diacel CF/S.

3. Procédé selon la revendication 1, **caractérisé en ce que** l'étape de formation d'un ester hydrosoluble d'héparine est effectuée à un degré d'estérification dudit ester de moins de 9,5 %.

4. Procédé selon la revendication 1, **caractérisé en ce que** l'étape de réduction avec du borohydrure est effectuée avec du NaBH₄ dans de l'eau à un pH compris entre 8,2 et 8,6.

5. Procédé selon la revendication 1, **caractérisé en ce que** ladite héparine présentant une faible masse moléculaire est de l'énoxaparine présentant une impureté en dermatane sulfate de moins de 0,04 %, lesdites étapes comprenant l'isolation du sel de benzéthonium héparine sur un adjuvant de filtration, la formation d'un sel de sodium d'ester d'héparine benzyle sur l'adjuvant de filtration, l'hydrolyse de l'ester de benzyle déposé sur l'adjuvant de filtration, l'isolation de l'énoxaparine en retirant ledit adjuvant de filtration et la purification de l'énoxaparine ainsi obtenue par réaction avec le borohydrure.

6. Procédé selon la revendication 3, **caractérisé en ce que** ladite héparine présentant une faible masse moléculaire est de l'énoxaparine présentant une impureté en dermatane sulfate de moins de 0,04 %, lesdites étapes comprenant l'isolation du sel de benzéthonium héparine sur un adjuvant de filtration, la formation d'un sel de sodium d'ester d'héparine benzyle sur l'adjuvant de filtration à un degré d'estérification dudit ester de moins de 9,5 %, l'hydrolyse de l'ester de benzyle déposé sur l'adjuvant de filtration, l'isolation de l'énoxaparine en retirant ledit adjuvant de filtration et la purification de l'énoxaparine ainsi obtenue par réaction avec le borohydrure.

7. Procédé selon les revendications 5 et 6, **caractérisé en ce que** ladite héparine présentant une faible masse moléculaire est de l'énoxaparine présentant un poids moléculaire moyen compris entre 3500 et 5500 daltons.

8. Procédé selon la revendication 7, **caractérisé en ce que** ladite héparine présentant une faible masse moléculaire est de l'énoxaparine présentant entre 12 et 20 % de fractions de poids moléculaire inférieur à 2000 daltons et entre 68 % et 88 % de fractions de poids moléculaire compris entre 2000 et 8000 daltons.
